# EUROPÄISCHE PATENTANMELDUNG

(11) **EP 2 685 139 A1**
(43) Veröffentlichungstag der Anmeldung: **15.01.2014**
(21) Anmeldenummer: 12176041.7
(22) Anmeldetag: 12.07.2012
(51) Int. Cl.: F16J 15/32, F16J 15/447

(54) **Labyrinthdichtung**

(71) Anmelder: Siemens Aktiengesellschaft, 80333 München (DE)
(72) Erfinder: Brach, Andreas, 09322 Penig (DE); Schreier, Friedheim, 09322 Penig (DE); Steubler, Thomas, 09385 Lugau /Erzgeb. (DE)

(57) **Zusammenfassung**

Die Erfindung betrifft eine Labyrinthdichtung sowie ein Verfahren zum Herstellen einer Labyrinthdichtung. Die Labyrinthdichtung umfasst einen an einem Gehäuse (5) fixierbaren Außenring (2) zum Umschließen einer Welle (4). Die Labyrinthdichtung weist eine Dichtlippe (1) auf, durch welche ein Ringspalt (6) zwischen dem Außenring (2) und der Welle (4) luftdicht abdichtbar ist.

## Beschreibung

Die vorliegende Erfindung betrifft eine Labyrinthdichtung sowie ein Verfahren zum Herstellen einer Labyrinthdichtung.

Entsprechend bisherigen Lösungen werden An- bzw. Abtriebswellen in Getrieben mittels Spalt- oder Labyrinthdichtungen berührungslos abgedichtet. Beim Transport eines Getriebes, insbesondere beim Seetransport, ist dies problematisch, da derartige Dichtungen das Getriebe bei transportbedingten Beschleunigungen nicht wirksam abdichten und Schmierstoff aus dem Getriebe austreten kann.

Um dieses Problem zu lösen, werden für den Transport entsprechend herkömmlichen Lösungen statische Zusatzdichtungen montiert. Zum Beispiel kann eine Labyrinthdichtung mit einem vorgesetzten V-Ring gegen äußere Einwirkungen gesichert werden. Ein V-Ring bietet hauptsächlich Schutz vor mechanischer Einwirkung, ist allerdings erfahrungsgemäß nicht in der Lage, einen Luftaustausch zwischen dem Getriebeäußeren und -inneren zu verhindern. Bei der Lagerung bzw. dem Transport von offenen, d. h. mit einer Labyrinthdichtung versehenen Getrieben ist somit nur eine eingeschränkte Konservierung vorhanden. Das bedeutet, dass innerhalb des Getriebes sich durch eindringende Luftfeuchte und Temperaturschwankungen Kondenswasser bilden und Korrosion entstehen kann. Zusätzlich ist es möglich, dass unter ungünstigen Umständen Staub und Spritzwasser in das Getriebe gelangt.

Eine Aufgabe der vorliegenden Erfindung ist es daher, eine mit einer Labyrinthdichtung versehene Wellendurchführung anzugeben, die während einer Lagerung bzw. eines Transports luftdicht abgedichtet ist.

Diese Aufgabe wird erfindungsgemäß durch eine Dichtung mit den in Anspruch 1 angegebenen Merkmalen gelöst. Und die Aufgabe wird durch ein Verfahren mit den in Anspruch 11 angegebenen Merkmalen gelöst.

Die erfindungsgemäße Labyrinthdichtung umfasst einen Außenring zum Umschließen einer Welle. Der Außenring ist an einem Gehäuse fixierbar. Die Labyrinthdichtung weist eine Dichtlippe auf. Mittels der Dichtlippe ist ein Ringspalt zwischen dem Außenring und der Welle luftdicht abdichtbar.

Unter Gehäuse sind alle Teile zu verstehen, die bei einer bestimmungsgemäßen Rotation der Welle relativ zu der Welle rotieren, z. B. ein Gehäusekörper, ein Gehäusedeckel, ein Getriebedeckel oder ein Lagersitzdeckel. Vorzugsweise steht das Gehäuse still; es sind aber auch Anwendungen denkbar, bei denen sowohl die Welle als auch das Gehäuse rotieren, allerdings mit unterschiedliche Rotationsgeschwindigkeiten. Unter Dichtlippe ist jegliche dichtende Vorrichtung zu verstehen, welche den erfindungsgemäßen Zweck erfüllt, z. B. ein Dichtring, hohl oder voll ausgeführt, eine Dichtlippe oder ein anders geformtes Dichtprofil.

Das erfindungsgemäße Verfahren dient zum Herstellen einer Labyrinthdichtung. Eine Dichtlippe wird an einem an einem Gehäuse fixierbaren Außenring zum Umschließen einer Welle angeordnet. Mittels der Dichtlippe ist ein Ringspalt zwischen dem Außenring und der Welle luftdicht abdichtbar.

Durch die Erfindung wird eine Abdichtung geschaffen, die eine umfassende Konservierung des Getriebeinneren während einer Lagerung bzw. eines Transports gewährleistet.

Der Erfindung liegt die Erkenntnis zugrunde, dass eine Dichtung direkt an der Welle eine zuverlässig luftdichte Dichtung bereitstellt. Durch ihre elastischen Eigenschaften übt eine Dichtlippe, z. B. ein Dichtring, am inneren Umfang des Außenrings einen Druck in radialer Richtung direkt auf die Welle aus. Im Gegensatz zu den bisher eingesetzten V-Ringen, bei denen die Elastizität der Dichtlippe zu einem axialen Verschieben des V-Rings auf der Welle und somit zu einem Verlust der Luftdichtheit führen kann, bleibt mit der vorliegenden Erfindung die Luftdichtheit dauerhaft erhalten.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Daher muss sichergestellt sein, dass der Ring abgenommen wird oder sich auflöst bzw. zerbröselt. In der Patentanmeldung ist daher noch näher zu spezifizieren, wie der Dichtring vor Inbetriebnahme entfernt wird. Zum Beispiel ist der Dichtring zusammen mit einem Netz oder einer Kappe, die die Welle schützen, abzuziehen.

Gemäß einer bevorzugten Ausgestaltung der Erfindung ist der Außenring mit einem äußeren Umfang an dem Gehäuse fixierbar und die Dichtlippe an einem inneren Umfang des Außenrings angeordnet. Von Vorteil ist dabei, dass die Breite der Dichtung durch die Dichtlippe nicht signifikant zunimmt.

Gemäß einer bevorzugten Ausgestaltung der Erfindung ist die an einem inneren Umfang des Außenrings angeordnete Dichtlippe an einer Kante des Außenrings oder in einem axial mittleren Bereich des Außenrings angeordnet. Von Vorteil ist dabei, dass die Dichtlippe fest und an einer definierten Position an dem Außenring fixiert ist.

Gemäß einer bevorzugten Ausgestaltung der Erfindung besteht die Dichtlippe aus einem elastomeren Material oder weist zumindest ein elastomeres Material auf. Von Vorteil ist dabei, dass die Dichtlippe elastische Eigenschaften aufweist und somit über den gesamten Wellenumfang an der Welle anliegt. Eine zuverlässige Luftdichtheit ist somit gewährleistet.

Gemäß einer bevorzugten Ausgestaltung der Erfindung ist die Dichtlippe mittels Vulkanisieren an dem Außenring befestigt. Durch Vulkanisieren wird eine feste Verbindung zwischen dem Außenring und der Dichtlippe erreicht.

Gemäß einer bevorzugten Ausgestaltung der Erfindung ist die Dichtlippe ohne Beschädigung des Außenrings von der Welle abziehbar. Im luftdichten Zustand der Labyrinthdichtung steht die Dichtlippe mit dem Außenring in Kontakt, ist aber davon ablösbar. Dadurch kann die Dichtlippe vor der Inbetriebnahme der Welle entfernt werden. Durch das Abziehen der Dichtlippe wird die Labyrinthdichtung also als eine berührungslose Dichtung ausgebildet, mit entsprechend geringen Reibungsverlusten und geringem Verschleiß.

Durch den anfänglichen direkten Kontakt zwischen der Dichtlippe und der Welle zur luftdichten Abdichtung kommt es nach einem Andrehen der Welle bei Inbetriebnahme eines die Welle umfassenden Getriebes oder Motors aufgrund von Reibung zwischen der Dichtlippe und der Welle zu einem Abtrag bzw. Abrieb von Material der im Vergleich zu der Welle weicheren Dichtlippe. Die Zeitspanne, bis nach einem Andrehen der Welle ein kontaktloser Zustand zwischen der Dichtlippe und der Welle erreicht ist, liegt je nach Betriebsbedingungen und Materialien vorzugsweise im Bereich von wenigen Sekunden bis einigen Minuten. Auf diese Weise kann das Entfernen der Dichtlippe vor der Inbetriebnahme der Welle entfallen; trotzdem ist die Labyrinthdichtung nach relativ kurzer Zeit, nachdem sich die Dichtlippe an den Kontaktstellen mit der Welle in ausreichendem Maß abgelöst hat, wieder als berührungslose Dichtung ausgebildet, d. h. ohne Reibungsverluste und ohne Verschleiß.

Gemäß einer bevorzugten Ausgestaltung der Erfindung umfasst die Labyrinthdichtung einen auf einer Welle fixierbaren Innenring, welcher eine zu dem Außenring korrespondierende Form aufweist. Die beiden miteinander in Beziehung stehenden Ringe bilden zusammen den abdichtenden Spalt der Labyrinthdichtung.

Gemäß einer bevorzugten Ausgestaltung der Erfindung besteht der Außenring zumindest teilweise aus einem Metall. Ein Metallring ist besonders beständig und stabil.

Gemäß einer bevorzugten Ausgestaltung des Verfahrens wird an einem an einem Gehäuse fixierbaren Außenring zum Umschließen einer Welle eine Dichtlippe angeordnet, durch welche ein Ringspalt zwischen dem Außenring und der Welle luftdicht abdichtbar ist.

Gemäß einer bevorzugten Ausgestaltung des Verfahrens wird die Dichtlippe an den metallischen Außenring anvulkanisiert.

Der Erfindungsgedanke umfasst auch ein Getriebe, umfassend ein Gehäuse mit einer Gehäuseöffnung, eine durch die Gehäuseöffnung ragende An- oder Abtriebswelle und eine Labyrinthdichtung nach einer der oben beschriebenen Ausgestaltungen, wobei die Dichtlippe des Außenrings einen Ringspalt zwischen dem Gehäuse und der Welle luftdicht abdichtet.

Im Folgenden wird die Erfindung anhand mehrerer Ausführungsbeispiele unter Zuhilfenahme der beiliegenden Zeichnungen erläutert. Es zeigt bzw. zeigen
- Fig. 1: einen Schnitt durch eine Wellenabdichtung; und
- Fig. 2 und 3: alternative Positionen einer Dichtlippe.

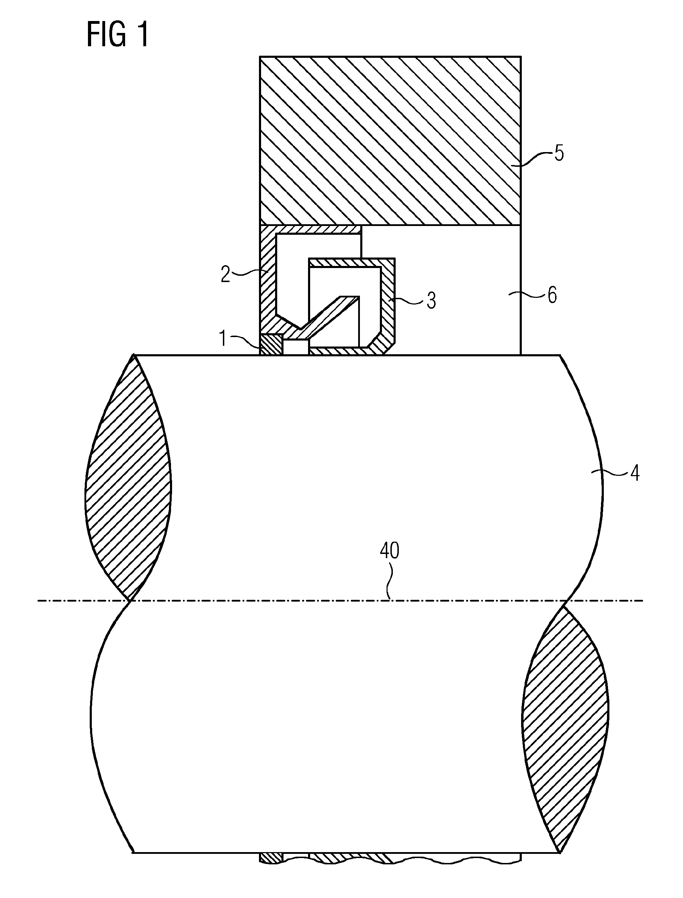

Fig. 1 zeigt einen Schnitt entlang einer Achse 40 einer An- oder Abtriebswelle 4 eines Getriebes. Im Bereich eines Getriebegehäusedeckels 5 tritt die Welle 4 durch eine Öffnung in dem Getriebedeckel 5. Zwischen der Welle 4 und dem Gehäusedeckel 5 ist somit ein Ringspalt 6 gebildet. Um zu verhindern, dass Schmierstoff aus dem Inneren des Gehäuses nach außen tritt und dass unerwünschte Stoffe und Partikel, z. B. Staub oder Wassertröpfchen, in das Gehäuseinnere treten, ist in dem Ringspalt 6 als Wellendichtung eine Labyrinthdichtung angeordnet.

Die Labyrinthdichtung umfasst einen Außenring 2, der an dem Gehäusedeckel 5 fixiert ist, und einen Innenring 3, der auf der Welle 4 fixiert ist und eine zu dem Außenring 2 korrespondierende Form aufweist.

Um einen Luftaustausch zwischen dem Gehäuseinneren und dem Gehäuseäußeren zu verhindern, ist auf dem inneren Umfang des Außenrings 2 eine Dichtlippe 1, z. B. in Form eines Dichtrings, angebracht. An der Kante des Außenrings 2, welche zwischen einer von dem Innenring 3 abgewandten Stirnseite des Außenrings 2 und einer der Welle 4 zugewandten Seite des Außenrings 2 liegt, ist eine Fase angebracht, in der die Dichtlippe 1 sitzt. Die Dichtlippe 1 kann auf dem Außenring 2 aufvulkanisiert oder aufgeklebt sein. Es ist auch möglich, dass die Dichtlippe aufgrund von Reibungskräften zwischen der Welle 4 und dem Außenring 2 fixiert ist.

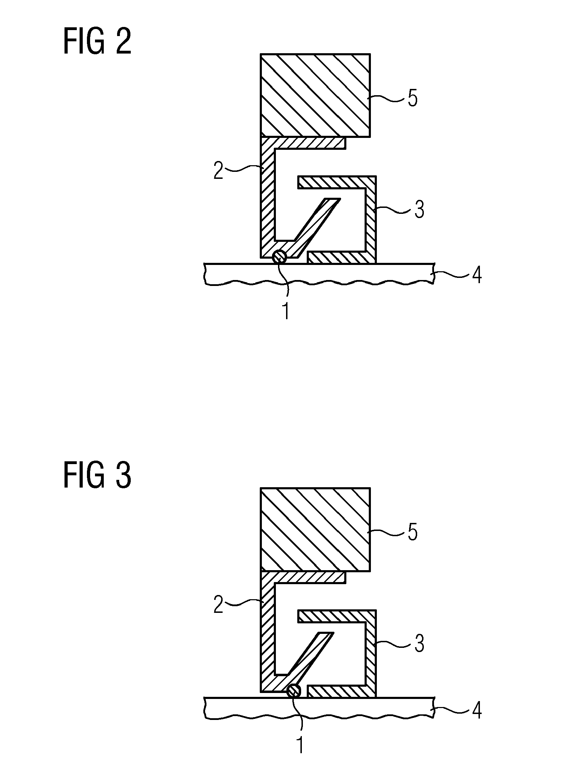

Alternative Positionen zur Positionierung der Dichtlippe 1 sind in den Fig. 2 und 3 gezeigt. In Fig. 2 sitzt die Dichtlippe 1 in einem mittleren Bereich einer der Welle 4 zugewandten Seite des Außenrings 2. In Fig. 2 sitzt die Dichtlippe 1 auf einer dem Innenring 3 zugewandten Kante des Außenrings 2.

Bevor das Getriebe nach Lagerung und/oder Transport in Betrieb genommen wird, kann die Dichtlippe 1 abgenommen werden, z. B. zusammen mit einem während einer Lagerung bzw. eines Transports das Getriebe schützenden Netz, welches mit der Dichtlippe 1 verbunden ist. Es ist auch möglich, dass die Dichtlippe 1 zusammen mit einer während einer Lagerung bzw. eines Transports die Welle schützenden Schutzkappe abgenommen wird, welche mit der Dichtlippe 1 verbunden ist.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Labyrinthdichtung mit einem an einem Gehäuse (5) fixierbaren Außenring (2) zum Umschließen einer Welle (4), wobei die Labyrinthdichtung eine Dichtlippe (1) aufweist, durch welche ein Ringspalt (6) zwischen dem Außenring (2) und der Welle (4) luftdicht abdichtbar ist.

2. Labyrinthdichtung nach Anspruch 1, wobei der Außenring (2) mit einem äußeren Umfang an dem Gehäuse (5) fixierbar ist und die Dichtlippe (1) an einem inneren Umfang des Außenrings (2) angeordnet ist.

3. Labyrinthdichtung nach Anspruch 1 oder 2, wobei die an einem inneren Umfang des Außenrings (2) angeordnete Dichtlippe (1) an einer Kante des Außenrings (2) oder in einem axial mittleren Bereich des Außenrings (2) angeordnet ist.

4. Labyrinthdichtung nach einem der vorhergehenden Ansprüche, wobei die Dichtlippe (1) aus einem elastomeren Material besteht oder zumindest ein elastomeres Material aufweist.

5. Labyrinthdichtung nach einem der vorhergehenden Ansprüche, wobei die Dichtlippe (1) mittels Vulkanisieren an dem Außenring (2) befestigt ist.

6. Labyrinthdichtung nach einem der vorhergehenden Ansprüche, wobei die Dichtlippe (1) ohne Beschädigung des Außenrings (2) vom Außenring (2) abziehbar ist, vorzugsweise in axialer Richtung (40).

7. Labyrinthdichtung nach einem der vorhergehenden Ansprüche, wobei die Dichtlippe (1) zumindest an seinem inneren Umfang aus einem Material besteht, welches bei Reibung an einer rotierenden Welle (4) verschleißt.

8. Labyrinthdichtung nach einem der vorhergehenden Ansprüche, umfassend einen auf der Welle (4) fixierbaren Innenring (3), welcher eine zu dem Außenring (2) korrespondierende Form aufweist.

9. Labyrinthdichtung nach einem der vorhergehenden Ansprüche, wobei der Außenring (2) zumindest teilweise aus einem Metall besteht.

10. Getriebe, umfassend ein Gehäuse mit einer Gehäuseöffnung, eine durch die Gehäuseöffnung ragende An- oder Abtriebswelle (4) und eine Labyrinthdichtung nach einem der vorhergehenden Ansprüche, wobei die Dichtlippe (1) des Außenrings (2) einen Ringspalt (6) zwischen dem Gehäuse (5) und der Welle (4) luftdicht abdichtet.

11. Verfahren zum Herstellen einer Labyrinthdichtung, wobei an einem an einem Gehäuse (5) fixierbaren Außenring (2) zum Umschließen einer Welle (4) eine Dichtlippe (1) angeordnet wird, durch welche ein Ringspalt (6) zwischen dem Außenring (2) und der Welle (4) luftdicht abdichtbar ist.

12. Verfahren nach Anspruch 11, wobei die Dichtlippe (1) an den metallischen Außenring (2) anvulkanisiert wird.

13. Verfahren nach Anspruch 11 oder 12, wobei an dem Außenring (2) eine Fase und/oder eine Nut zur Aufnahme der Dichtlippe (1) ausgebildet wird.
